# EUROPÄISCHE PATENTSCHRIFT

(11) **EP 0 720 885 B1**
(45) Veröffentlichungstag und Bekanntmachung des Hinweises auf die Patenterteilung: **22.03.2000**
(21) Anmeldenummer: 95119674.0
(22) Anmeldetag: 14.12.1995
(51) Int. Cl.: B23F 21/20, B23F 17/00, B23F 19/00

(54) **Werkzeug zum Erzeugen von Hinterlegungen an Verzahnungen**
Tool for producing undercuts in gear teeth
Outil pour obtenir des parties chanfreinées dans des dentures

(30) Priorität: 07.01.1995 DE 19500314
(43) Veröffentlichungstag der Anmeldung: 10.07.1996
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Heller, Dirk, D-50829 Köln (DE); Constance, Ian, D-50678 Köln (DE); Clemens, Hubert, D-50969 Köln (DE)
(74) Vertreter: Messulam, Alec Moses

(56) Entgegenhaltungen:
- EP-A- 0 625 399
- DE-C- 4 200 418
- GB-A- 2 033 267

## Beschreibung

Die Erfindung bezieht sich auf ein Werkzeug zum Erzeugen von Hinterlegungen an Verzahnungen nach dem Oberbegriff des Patentanspruches gemäß einem Verfahren, das in der DE-PS 42 00 418 beschrieben ist.

Bei dem bekannten Verfahren zum Erzeugen von Hinterlegungen an geraden Innen- bzw. Außenverzahnungen eines Werkstückes mittels eines spanenden Werkzeuges wird relativ zum Werkstück ein sich auf einer Hypo- bzw. Epizykloide bewegendes Einzahnwerkzeug in die zu bearbeitende Verzahnung gestoßen, wobei die Zykloide derart gewählt ist, daß der jeweils in die zu bearbeitende Verzahnung eintauchende Zykloidenast oder Umkehrpunkt sich wenigstens angenähert mit dem Eingriffswinkel der zu bearbeitenden Verzahnung deckt. Ein gerundeter Bereich um den Umkehrpunkt ist günstig für ein Ablösen eines gebildeten Spans.

Bei diesen bekannten Verfahren beschreibt die Flugkurve des Einzahnwerkzeuges eine Kurve, die nur ungenügend bzw. nur in Teilbereichen der Evolventenform der Verzahnung entspricht.

Die Aufgabe der vorliegenden Erfindung ist es, ein Werkzeug zur Durchführung des bekannten Verfahrens zu schaffen, das durch Überlagerung zweier Flugkurven von zwei Schneidkanten des Werkzeuges die Evolventenform der Verzahnung noch besser angenähert erstellt.

Gemäß der Erfindung wird diese Aufgabe gelöst, indem an dem Werkzeug zur Erzeugung von Hinterlegungen an Verzahnungen, der aus der Patentschrift bekannten Art eine erste und eine zweite Schneidkante in einem solchen Winkelabstand und mit einer solchen Radialanordnung angeordnet sind und der in die Verzahnung eintauchende Zykloidenast derart ausgerichtet wird, daß die erste Schneidkante einen ersten Teilbereich der Verzahnung abdeckt und die zweite Schneidkante einen überlap enden Teilbereich der Evolventenverzahnung abdeckt. Dabei ergeben die beiden Teilbereiche insgesamt eine bessere Annäherung an die Evolventenform der Verzahnung.

Die Erfindung wird anhand des in den Zeichnungen gezeigten Werkzeuges näher erläutert. Es zeigt:
- Fig. 1: eine Seitenansicht eines Werkzeuges gemäß der Erfindung;
- Fig. 2: eine Draufsicht auf ein Werkzeug gemäß der Erfindung;
- Fig. 3: eine Ansicht des Werkzeuges in Richtung des Pfeiles III in Fig. 1, mit einem Teilschnitt im Bereich der Spanneinrichtung und
- Fig. 4: einen Teilschnitt durch eine Verzahnung mit Angabe der aufeinanderfolgend wirksam werdenden Flugkurven der ersten und zweiten Schneidkanten.

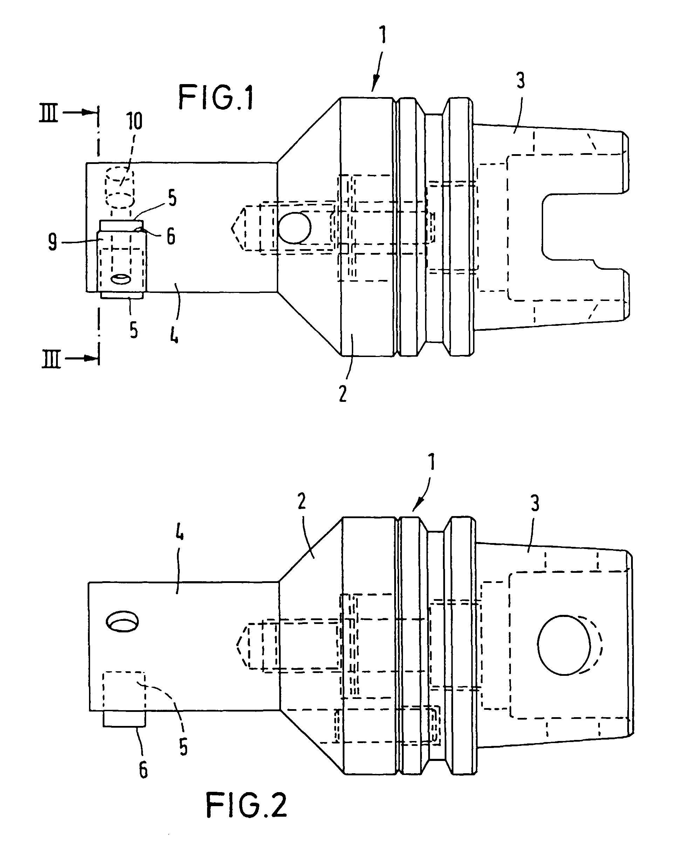

Das in den Fig. 1 bis 3 gezeigte Werkzeug 1 besteht im wesentlichen aus einem Werkzeugkörper 2, dessen eines Ende als Maschinenaufnahme 3 und dessen anderes Ende als Schneidplattenaufnahme 4 ausgebildet ist.

Gemäß der Erfindung ist an der Schneidplattenaufnahme 4 eine erste Schneidplatte 5 mit einer ersten Schneidkante 6 sowie eine in einem bestimmten Winkelabstand angeordnete zweite Schneidplatte 7 mit einer zweiten Schneidkante 8 angeordnet.

Die Schneidplatten 5 und 7 werden in üblicher Weise über eine aus einem Spannstück 9 und einer Spannschraube 10 gebildeten Spanneinrichtung an der Schneidplattenaufnahme 4 verspannt.

Der Winkelabstand ergibt sich aus dem Gesamtumfang von 360° geteilt durch den Abstand bzw. die Anzahl der Zähne des Werkstückes, die zwischen dem Eintauchen des Zykloidenastes bzw. des Umkehrpunktes liegen, vervielfacht um den Abstand bzw. die Anzahl der Zähne, nach der die zweite Schneidkante wirksam werden soll.

Die Radiallage x und y der ersten und zweiten Schneidkante 6 bzw. 8 wird durch empirische Abstimmung ermittelt.

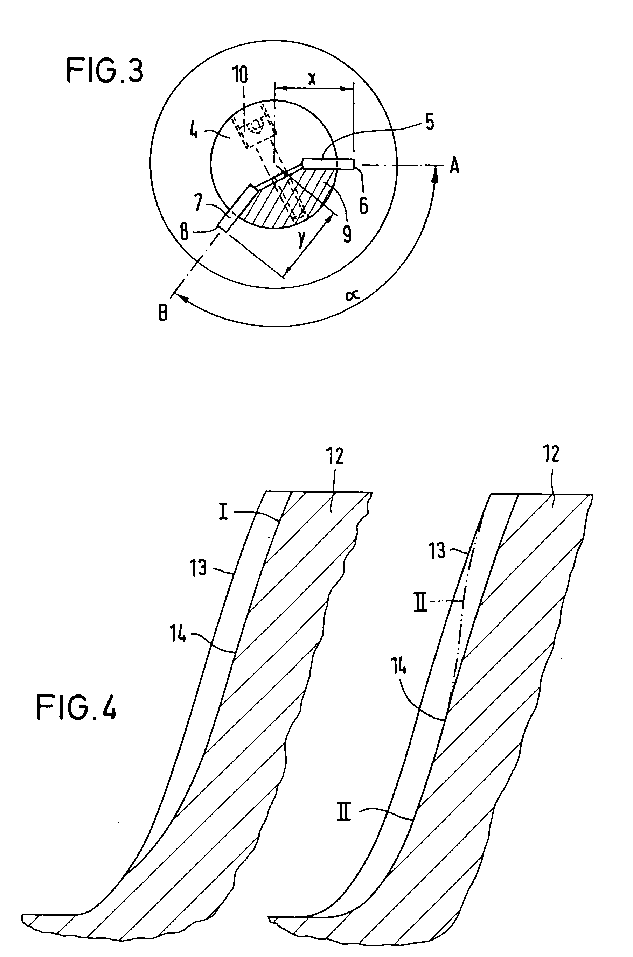

Wie aus Fig. 4 ersichtlich ist, weist ein Zahn 12 eine Zahnflanke 13 auf, die mit einer Hinterlegung 14 zu versehen ist. Die Zahnflanke 13, die im wesentlichen einer Evolvente entspricht, wird von der ersten Schneidkante 6 entlang einer Flugkurve I bearbeitet, die Material entlang einer Bahn abnimmt, wie sie im linken Teil der Fig. 4 durch die Flugkurve I gezeigt ist.

Durch die in einem bestimmten Winkelabstand und mit einem bestimmten radialen Vorstand y angeordnete zweite Schneidkante 8 wird eine überlagerte Flugkurve II beschrieben, die Material insbesondere am Fuß der Zahnflanke 13 des Zahnes 12 abträgt, wie dies im rechten Teil der Fig. 4 gezeigt ist.

Auf diese Weise kann eine Hinterlegung der Verzahnung erzielt werden, deren Verlauf noch weiter dem Verlauf der Evolventenform der Verzahnung angepaßt werden kann.

## Patentansprüche

1. Werkzeug zum Erzeugen von Hinterlegungen an Verzahnungen, dessen Schneidkante relativ zur Werkstückverzahnung für die Bearbeitung einer Innenverzahnung auf einer Hypozykloide und für die Bearbeitung an einer Außenverzahnung auf einer Epizykloide bewegt wird, so daß der Schneideingriff in die Verzahnung jeweils im Spitzenbereich der Zykloide stoßend erfolgt, wobei die Zykloide derart gewählt wird, daß der jeweils in die zu bearbeitende Verzahnung eintauchende Zykloidenast sich wenigstens angenähert mit dem Eingriffswinkel der zu bearbeitenden Verzahnung deckt und wobei die Schnittzustellung durch relatives Verdrehen von Werkzeug und Werkstück vorgenommen wird,
**dadurch gekennzeichnet,** daß
- eine erste und eine zweite Schneidkante (6, 8) in einem solchen Winkelabstand (α) und mit einer solchen Radialanordnung (x, y) angeordnet sind und der in die Verzahnung eintauchende Zykloidenast derart ausgerichtet wird, daß die erste Schneidkante (6) einen ersten Teilbereich (Flugkurve I) der Verzahnung abdeckt und die zweite Schneidkante (8) einen überlappenden Teilbereich (Flugkurve II) der Verzahnung abdeckt.

## Claims

1. Tool for producing undercuts on gear teeth whose cutting edge is moved in a hypocycloid relative to the workpiece toothing for machining inner toothing and in an epicycloid relative to the workpiece toothing for machining outer toothing in such a manner that the cutting action in the tooth always takes place in a thrusting manner in the tip area of the cycloid, whereby the cycloid is selected such that the cycloid branch plunging into the tooth to be machined coincides at least approximately with the angle of pressure of the tooth to be machined and whereby the cutting feed is made through relative twisting of tool and workpiece, characterised in that
- a first and a second cutting edge (6, 8) are positioned at such an angular distance (α) and with such radial positioning (x, y) and the cycloid branch plunging into the gearing is aligned in such a manner that the first cutting edge (6) coincides with a first partial area (flight curve I) of the toothing and the second cutting edge (8) coincides with an overlapping partial area (flight curve II) of the toothing.

## Revendications

1. Outil pour produire des contre-dépouilles sur des dentures, dont l'arête coupante est déplacée par rapport à la denture de la pièce sur une hypocycloïde pour l'usinage d'une denture intérieure et sur une épicycloïde pour l'usinage d'une denture extérieure, de sorte que l'engagement de coupe dans la denture s'effectue chaque fois à percussion dans la région du sommet des cycloïdes, les cycloïdes étant choisies de telle sorte que la branche respective de cycloïde s'enfonçant dans la denture à usiner coïncide au moins approximativement avec l'angle d'attaque de la denture à usiner, et l'avance de coupe étant entreprise par rotation relative de l'outil et de la pièce,
**caractérisé en ce** qu'une première arête coupante (6) et une seconde arête coupante (8) sont disposées à une distance angulaire (α) telle et avec une disposition radiale (x, y) telle, et la branche de la cycloïde qui s'enfonce dans la denture est orientée de telle sorte, que la première arête coupante (6) couvre une première région partielle (trajectoire I) de la denture et que la seconde arête coupante (8) couvre une région partielle en chevauchement (trajectoire II) de la denture.
